# EUROPÄISCHE PATENTANMELDUNG

(11) **EP 0 844 339 A2**
(43) Veröffentlichungstag der Anmeldung: **27.05.1998**
(21) Anmeldenummer: 97119686.0
(22) Anmeldetag: 11.11.1997
(51) Int. Cl.: E03B 7/07

(54) **Anschlusseinheit für Grossgeräte-Wasserfilter**

(30) Priorität: 22.11.1996 DE 19648405
(71) Anmelder: Brita Wasser-Filter-Systeme GmbH, D-65232 Taunusstein-Neuhof (DE)
(72) Erfinder: Brauburger, Thomas, 65558 Oberneisen (DE)
(74) Vertreter: Weber, Dieter, Dr.

(57) **Zusammenfassung**

Die vorliegende Erfindung betrifft eine Anschlußeinheit für Großgeräte-Wasserfilter, mit einer in den Filter hineinführenden Zulaufleitung (1) und einer gefiltertes Wasser aus dem Filter herausführenden Ablaufleitung (2). Um eine relativ einfache und preiswerte Möglichkeit zu schaffen, die es erlaubt, Großküchengeräte und ähnliche an einen Großgeräte-Wasserfilter angeschlossene Geräte mit Wasser zu versorgen, welches nicht vollständig entsalzt ist, sondern einen nach Bedarf einstellbaren Salzgehalt aufweist, wird erfindungsgemäß vorgeschlagen, daß in einem die Zulaufleitung (1) und die Ablaufleitung (2) verbindenden Bypass (3) ein Dosierventil (4) vorgesehen ist, welches eine gezielt einstellbare Verschneidung von gefiltertem und ungefiltertem Wasser in der Ablaufleitung erlaubt.

## Beschreibung

Die vorliegende Erfindung betrifft eine Anschlußeinheit für Großeräte-Wasserfilter, mit einer in den Filter hineinführenden Zulaufleitung und einer gefiltertes Wasser aus dem Filter herausführenden Ablaufleitung. Eine derartige Anschlußeinheit ist bereits seit längerem bekannt. Diese Anschlußeinheit wird typischerweise an elektrischen Großküchengeräten, z. B. an Kaffeemaschinen, Geschirrspülmaschinen, Warmwasserbereitern etc. montiert und verbindet einen normalen Wasseranschluß über einen zwischengeschalteten Wasserfilter mit dem betreffenden Gerät. Hierzu wird die Anschlußeinheit an den Wasserfilter angeflanscht, wobei die Zulaufleitung mit der allgemeinen Wasserversorgung und die Ablaufleitung der Anschlußeinheit mit dem betreffenden Gerät bzw. dessen Wasserzulauf verbunden wird. Für die Verbindung mit einer Wasserleitung und dem anzuschließenden Gerät sind an den freien Enden von Zulauf- und Ablaufleitung jeweils entsprechende Anschlußeinrichtungen bzw. Rohrstutzen, gegebenenfalls mit Gewinde, vorgesehen.

Eine derartige Anschlußeinheit ist bereits seit längerem aus der Praxis bekannt. Die bekannte Anschlußeinheit besteht im wesentlichen aus zwei parallelen, gemeinsam abgewinkelten Rohren, die einen solchen Abstand voneinander haben, daß sie unmittelbar auf einen mit passenden Gegenstücken versehenen Großgeräte-Wasserfilter aufgesteckt werden können, wobei ein die Zulaufleitung und die Ablaufleitung umgebender Flansch mit einem passenden Gegenstand an dem Großgeräte-Wasserfilter fest und dicht verbunden wird. Die abgewinkelten, freien Enden der beiden Rohre, die als Zulaufleitung bzw. als Ablaufleitung dienen, sind ihrerseits mit Anschlußfenden versehen, um die Verbindung zu einem normalen Wasseranschluß und zu dem mit dem gefilterten Wasser zu versorgenden Gerät herzustellen. Der betreffende Großgeräte-Wasserfilter hat typischerweise ein Volumen in der Größenordnung von 5 bis 10 Litern, kann aber auch noch wesentlich größer sein, und ist mit einem Ionenaustauscherharz gefüllt, welches dem Wasser vor allem die Carbonathärte, bei Bedarf und je nach Ausgestaltung des Filtermaterials jedoch auch Nitrate, Chloride und Sulfate entziehen kann.

Das den Filter verlassende Wasser kann dann, je nach der Qualität des hineinfließenden Rohwassers, reinem, destillierten Wasser relativ nahekommen und ist damit gegenüber Metallen relativ aggressiv. Neben den damit verbundenen Korrosionsproblemen in den Geräten, die mit derartigem Wasser versorgt werden, treten insbesondere bei der Zubereitung von Speisen mit nahezu vollständig entsalztem Wasser Probleme hinsichtlich des Geschmackes der Speisen und/oder Getränke auf. So hatte sich beispielsweise gezeigt, daß Kaffee, um von den meisten Kaffeetrinkern als wohlschmeckend empfunden zu werden, nicht mit vollständig entsalztem Wasser hergestellt werden kann, sondern daß das hierfür verwendete Wasser noch eine gewisse Resthärte benötigt.

Andererseits ist die Wasserqualität vielerorts so schlecht, oder es sind im Wasser zumindest derart viele Salze enthalten, daß auch dies dem Geschmack der damit zubereiteten Speisen abträglich ist, wobei außerdem erhebliche Probleme durch das sogenannte "Verkalken" der mit dem Wasser versorgten Geräte entstehen.

Es wäre daher wünschenswert, wenn die Wasserfilter das Wasser entweder generell oder noc besser je nach Verwendungszweck nur teilweise und nicht vollständig entsalzen würden, was jedoch technisch nur sehr schwer zu verwirklichen ist.

Der vorliegenden Erfindung liegt angesichts dieses Standes der Technik die Aufgabe zugrunde, eine relativ einfache und preiswerte Möglichkeit zu schaffen, die es erlaubt, Großküchengeräte und ähnliche an einen Großgeräte-Wasserfilter angeschlossene Geräte mit Wasser zu versorgen, welches nicht vollständig entsalzt ist, sondern einen nach Bedarf einstellbaren Salzgehalt aufweist.

Diese Aufgabe wird dadurch gelöst, daß bei der eingangs erwähnten Anschlußeinheit in einem die Zulaufleitung und die Ablaufleitung verbindenden Bypass ein Dosierventil vorgesehen ist, welches eine gezielt einstellbare Veschneidung von gefiltertem und ungefiltertem Wasser in der Ablaufleitung erlaubt.

Um den Salzgehalt des Wassers in der Ablaufleitung zu variieren, braucht man also lediglich das in einem Bypass zwischen Zulauf- und Ablauf angeordnete Dosierventil mehr oder weniger zu öffnen und es tritt auf diese Weise über das Ventil und den Bypass ein einstellbarer Anteil des Wassers ungefiltert direkt von der Zulaufleitung in die Ablaufleitung ein, wobei mit Hilfe des Dosierventils in einem großen Bereich variable Mischungsverhältnisse einstellbar sind. Man kann also z. B. für die Zubereitung von Kaffee das Ventil etwas weiter öffnen, um dem Wasser einen höheren Salzgehalt mitzugeben, der jedoch gegenüber dem Salzgehalt des vollständig ungefilterten Wassers immer noch beträchtlich reduziert ist. Für andere Speisen oder Getränke, wie z. B. Tee, kann es dagegen wünschenswert sein, den Salzgehalt niedriger einzustellen und dementsprechend das Dosierventil weiter zu schließen. Die relativen Anteile von gefiltertem und ungefiltertem Wasser hängen dabei ab vom Durchströmungsquerschnitt der Zulaufleitung und der Ablaufleitung im Verhältnis zum Durchströmungsquerschnitt des Dosierventils und außerdem auch von dem Druckabfall, den das Wasser beim Durchströmen des Filters erfährt. Dieser Druckabfall ist jedoch bei den meisten derartigen Filtern und bei nicht allzu großem Wasserdurchsatz relativ gering, so daß das Mischungsverhältnis von ungefiltertem zu gefiltertem Wasser im wesentlichen durch das Querschnittsverhältnis von Dosierventil zu dem Querschnitt der Zu- und/oder Ablaufleitung bestimmt wird.

In der bevorzugten Ausführungsform der Erfindung ist vorgesehen, daß das Dosierventil zwei konzentrische, relativ zueinander drehbare, aber dicht ineinander geführte Rohre aufweist, welche auf gleicher axialer Höhe mindestens je eine Bohrung aufweisen, die in einer ersten relativen Position miteinander fluchten und die in einer zweiten relativen Position keine wechselseitige Überdeckung aufweisen, wobei die Rohre abgedichtet in den Bypass eingesetzt sind und das Innere des Innenrohres mit der einen Seite und das Äußere des Außenrohres mit der anderen Seite des Bypasses in Verbindung steht.

Werden dementsprechend die Bohrungen in den Rohren fluchtend miteinander ausgerichtet bzw. zu einer (mindestens teilweisen) Überdeckung gebracht, so kann das Wasser von der einen Seite des Bypasses durch das Dosierventil in die andere Seite des Bypasses strömen. Dabei sind grundsätzlich beide Strömungsrichtungen denkbar, nämlich einerseits in das Innenrohr des Ventils, von dort durch die miteinander fluchtend ausgerichteten oder mindestens teilweise sich überdeckenden Bohrungen zur Außenseite des Außenrohres und der betreffenden Seite des Bypasses. Ebenso kann die Strömung jedoch auch in umgekehrter Richtung erfolgen, wenn die Positionen von Zulaufleitung und Ablaufleitung relativ zum Dosierventil entsprechend vertauscht sind.

Bevorzugt ist eine Ausführungsform der Erfindung, bei welcher die Bohrungen in den Rohren als Durchgangsbohrungen ausgebildet sind, so daß also Außenrohr und Innenrohr jeweils ein Paar von diametral gegenüberliegenden Bohrungen aufweisen, die sich in Umfangsrichtung der Rohre über jeweils weniger als 90° erstrecken. Die Erstreckung über weniger als 90° in Umfangsrichtung stellt dann sicher, daß das Ventil auch vollständig geschlossen werden kann, indem die diametral gegenüberliegenden Bohrungen des einen Rohres relativ zu den Bohrungen des anderen Rohres um 90° verdreht angeordnet werden. Ansonsten sind teilweise Überdeckungen der Bohrungen bis hin zu einer gemeinsamen, zentralen Ausrichtung möglich, in welcher das Wasser durch den vollen Bohrungsquerschnitt strömen kann.

Zweckmäßigerweise wird eines der beiden Rohre, vorzugsweise das Außenrohr, im Bypass fixiert, während das andere Rohr, vorzugsweise das Innenrohr, mit einer Ventilbetätigungseinrichtung verbunden ist, welche es erlaubt, das Innenrohr relativ zum Außenrohr zu verdrehen.

Dabei kann zweckmäßigerweise auch eine Skala an der Ventilbetätigung vorgesehen sein, welche proportional zum Winkelmaß der Überdeckung der Bohrungen der Rohre ist bzw. eine entsprechende relative Verdrehung anzeigt. Dies erlaubt eine reproduzierbare und exakte Einstellung bestimmter Mischungsverhältnisse zwischen gefiltertem und nicht gefiltertem Wasser. Grundsätzlich hängt dieses Mischungsverhältnis von den freien Querschnitten der Zulauf- und Ablaufleitungen ab, die vorzugsweise wesentlich größer sind als der freie Druchflußquerschnitt des Ventils, und hängt außerdem von dem Druckabfall ab, den das Wasser im Filter erfährt. Üblicherweise ist dieser Druckabfall jedoch relativ gering, zumindest solange auf der Ablaufseite nicht allzu große Mengen pro Zeiteinheit entnommen werden.

In der bevorzugten Ausführungsform der Erfindung ist der freie Innenquerschnitt des Innenrohres und auch der Querschnitt des die Bohrungen der Rohre umgebenden Raumes (entweder des Bypasses oder im Bereich der Zulauf- oder Ablaufleitung) größer als der Querschnitt der einzelnen Bohrungen im Innen- und Außenrohr. Hierdurch wird sichergestellt, daß nicht der Querschnitt des Innenrohres selbst oder der Querschnitt des Zuflusses zu dem Ventil die Beimischung von ungefiltertem Wasser begrenzt, sondern ausschließlich die Ventileinstellung, d. h. das Maß der Überdeckung der Querbohrungen in den Innen- und Außenrohren. Dies gilt auch dann noch, wenn die Summe der Querschnitte der gegenüberliegenden Bohrungen doch noch etwas größer ist als der freie Querschnitt des Innenrohres, da durch zwei kleine Öffnungen aufgrund der geltenden Strömungsgesetze nur eine geringere Menge an Flüssigkeit hindurchtreten kann als durch eine einzelne, größere Öffnung, die insgesamt denselben oder sogar einen etwas geringeren Querschnitt hat.

Besonders bevorzugt ist eine Ausführungsform der Erfindung, bei welcher die Ventilrohre sich in den Bereich der Zulauf- oder Ablaufleitung erstrecken und in diesem Bereich auch die erwähnten Querbohrungen aufweisen. Dadurch wird ein problemloser Zufluß zu den Querbohrungen oder ein Abfluß aus den Querbohrungen sichergestellt.

Weiterhin ist in der bevorzugten Ausführungsform der Erfindung der Bypass als Stufenbohrung mit einem engeren und mit einem weiteren Abschnitt hergestellt, wobei der weitere Abschnitt als Dichtungssitz für einen an dem Außenrohr vorgesehenen Dichtungsring dient.

Dabei ist zweckmäßigerweise der Ventilkörper mit dem Außenrohr einstückig ausgebildet und weist einen Dichtungsflansch auf, der mit einem seitlichen Anschlußflansch der Anschlußeinheit dicht verbunden ist.

Der enge Abschnitt der Stufenbohrung weist zweckmäßigerweise denselben Querschnitt auf wie das Innenrohr und ist in Flucht mit diesem ausgerichtet.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine Draufsicht auf eine Anschlußeinheit ohne Dosierventil,
- Figur 2: eine verkleinerte Seitenansicht der Anschlußeinheit,
- Figur 3: eine schematische Schnittansicht mit einer Schnittebene parallel zur Papierebene in Figur 1 und mit einem eingesetzten Ventil,
- Figur 4: den Ventileinsatz in einem axiellen Längsschnitt,
- Figur 5: a) und b) eine stirnseitige Draufsicht und eine Seitenansicht des Ventileinsatzes, und
- Figur 6: eine weitere Ausführungsform in einer Ansicht entsprechend Figur 1.

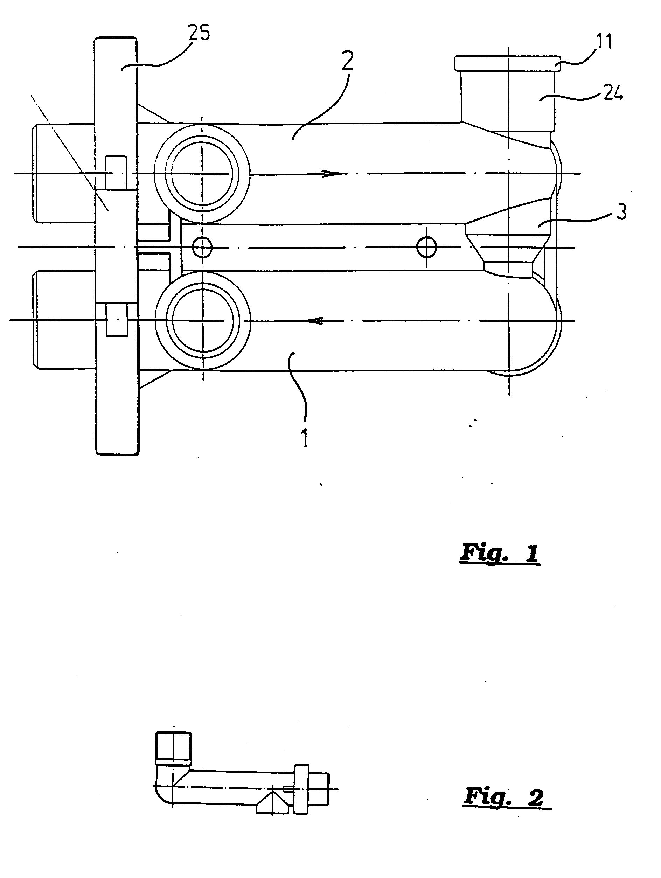

Die in den Figuren dargestellte Anschlußeinheit besteht aus zwei parallelen, abgewinkelten Rohren, nämlich der Zulaufleitung 1 und der Ablaufleitung 2, die am rechten Bildrand nach hinten aus der Papierebene heraus abgewinkelt sind, wie man in der Seitenansicht gemäß Figur 2 leicht erkennt. Die Fließrichtung wird durch Pfeile an den Zulauf- und Ablaufleitungen 1, 2 angedeutet. Die in Figur 1 links dargestellten Enden der Zulaufleitung 1 und der Ablaufleitung 2 sind von einem gemeinsamen Flansch 25 umgeben, mit Hilfe dessen die Anschlußeinheit an einem Großgerätewasserfilter angeflanscht wird.

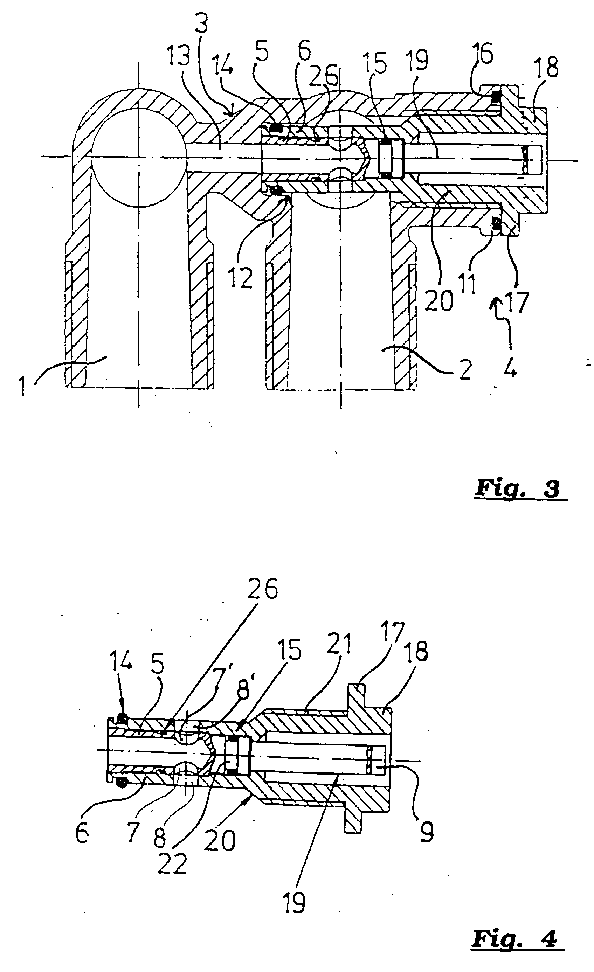

Am rechten Bildrand der Figur 1 erkennt man in dem Abwinkelungsbereich der Zulaufleitung 1 und der Ablaufleitung 2 einen die beiden Leitungen verbindenden Bypass 3, der nach oben über die Zulaufleitung 1 hinaus noch um einen Rohrstutzen 24 verlängert ist, der zur Aufnahme bzw. zum Einsetzen eines Dosierventils 4 dient. Dieses Dosierventil 4 ist in seinem montierten Zustand und mit weiteren Einzelheiten in den Figuren 3 bis 5 a) getrennt dargestellt. Die Figur 3 entspricht dabei einem Schnitt parallel zur Bildebene in Figur 1 und zwar entlang der Ebene, die durch die zentralen Achsen der Zulaufleitung 1 und der Ablaufleitung 2 definiert wird.

Man erkennt, daß das Ventil 4 mit seinem Ventilkorpus in den Rohrstutzen 24 eingeschraubt ist. Der Rohrstutzen 24 ist mit einem entsprechenden Innengewinde ausgestattet und der ebenfalls rohrförmige Ventilkorpus 20 weist ein entsprechendes Rohrgewinde 21 auf. Der Endflansch 11 an dem Rohrstutzen 24 weist eine stirnseitig umlaufende Nut auf, in welche ein Dichtungsring 16 eingelegt ist. Der Ventilkorpus ist außerdem mit einem Flansch 17 versehen, welcher im wesentlichen den gleichen Außendurchmesser hat wie der Flansch 11 des Rohrstutzens 24 und welcher für den dichten Eingriff mit dem Dichtungsring 16 gedacht ist. An den Flansch 17 ist stirnseitig noch ein Sechskant 18 angesetzt, der den Eingriff eines Schraubenschlüssels erlaubt, mit Hilfe dessen der Ventilkorpus 20 mit seinem Rohrgewinde 21 fest in den Rohrstutzen 24 eingeschraubt werden kann, so daß der Flansch 17 in festen und dichten Eingriff mit dem Dichtungsring 16 kommt.

Der Ventilkorpus 20 ist an seinem inneren Ende jenseits des Bohrgewindes 21 etwas verjüngt ausgebildet und einstückig mit einem Außenrohr 6 verbunden. Dieses Außenrohr 6 hat an seinem inneren Ende eine umlaufende Nut, in welche ein Dichtungsring 14 eingelegt ist. Dieses innere Ende mit dem Dichtungsring 14 erstreckt sich bei vollständig in den Rohrstutzen 24 eingeschraubtem Ventilkorpus 20 in den weiteren Abschnitt 12 des als Stufenbohrung 13, 12 ausgebildeten Bypasses 3 hinein. Dabei ist der weitere Abschnitt 12 geringfügig konisch ausgebildet, so daß beim Einschrauben des Ventilkorpus 20 in den Rohrstutzen 24 der Dichtungsring 14 in einen geringfügig enger werdenden Bereich dieses konischen Abschnittes 12 hineingeschoben wird und damit in festen Dichtungseingriff mit der Wand des Abschnittes 12 des Bypasses 3 kommt.

Der Ventilkorpus 20 ist als Rohr ausgebildet, wobei im Übergang zwischen dem Außenrohr 6 und dem Ventilkorpus 20 ein nach innen ragender Bund vorgesehen ist, der als Sitz bzw. Widerlager für eine Ventilbetätigungswelle 19 dient. Die Ventilbetätigungswelle 19 erstreckt sich zentral durch den Ventilkorpus 20 hindurch und ist an ihrem inneren Ende einstückig mit dem Innenrohr 5 des Ventils 4 verbunden. Kurz vor dem Übergang zu dem Innenrohr 5 weist die Welle 19 noch eine radiale Erweiterung auf, die eine Schulter bildet, welche an dem radial einwärts ragenden Bund am Übergang zwischen Ventilkorpus 20 und Außenrohr anliegt.

Der Außendurchmesser des Innenrohres und auch der radial erweiterte Abschnitt der Welle 19 haben einen Außendurchmesser, der dem Innendurchmesser des Außenrohres 6 entspricht, so daß sie mit Gleitpassung in dem Außenrohr 6 aufnehmbar sind. Dabei weist der radial erweiterte Abschnitt der Welle 19 noch eine umlaufende Nut auf, in welche ein passender Dichtungsring 15 eingelegt ist, der den Umfang der Welle 19 gegen die Innenfläche des Außenrohres 6 abdichtet.

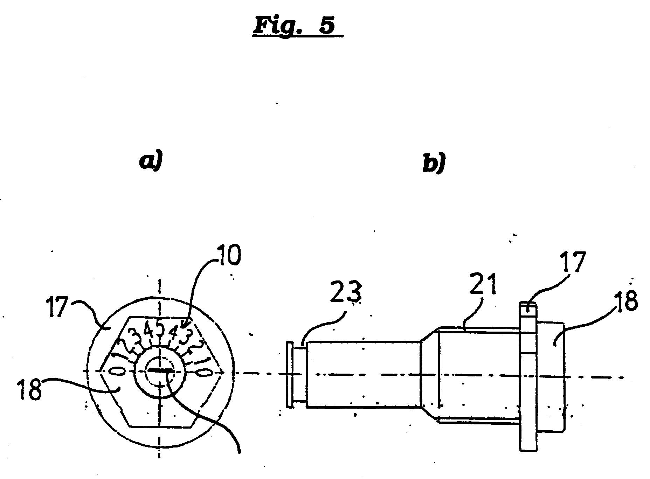

Innerhalb der Abdichtung durch den Dichtungsring 15 sind am Außenrohr 6 und am Innenrohr 5 sich quer durch diese Rohre hindurch erstreckende Querbohrungen 7, 7' bzw. 8, 8' vorgesehen. Die Welle 19 erstreckt sich auf der Außenseite bis in den Sechskantansatz 18 hinein und weist an ihrem freien Ende einen Schlitz 19 auf, der als Betätigungseinrichtung für die Welle 19 und damit für das Ventil 4 insgesamt dient. Dieser Schlitz 9 ist deutlich in der Draufsicht gemäß Figur 5 a) zu erkennen.

In Figur 5 a) sieht man außerdem, daß der Sechskantansatz 18 auf seiner Stirnseite eine die Wellen 19 umgebende Skalenteilung aufweist, im vorliegenden Fall von den Ziffern 0 bis 5 reichend, welche somit (einschließlich der vollständig geschlossenen Stellung "0") sechs verschiedene Einstellpositionen definiert, wobei selbstverständlich auch beliebige Zwischeneinstellungen möglich sind. Die in dem Schnitt der Figuren 3 und 4 dargestellte Position der Welle 19 und der Betätigungseinrichtung 9 sowie der entsprechenden Bohrungen 7, 7' und 8, 8' entspricht der Ausrichtung des Schlitzes 9 auf die Ziffer 5 und zeigt damit die vollständige Öffnung des Dosierventils 4 an, d. h. die Position, in welcher die Bohrungen 7, 8 und 7' und 8' in vollständiger Überdeckung miteinander fluchtend ausgerichtet sind.

Wie man anhand der Figur 3 deutlich erkennt, ist die Anschlußeinheit im Bereich des Dosierventils nach außen durch die Dichtringe 15 und 16 vollständig abgedichtet, nämlich zum einen am Übergang zwischen Innenrohr 5 bzw. Welle 19 zum Außenrohr 6 und am Ventilkorpus relativ zum Rohrstutzen 24 bzw. dessen Flansch 11. Der Dichtring 14, der in einer Nut 23 am inneren Ende des Außenrohres 6 vorgesehen ist, dient lediglich zum Abdichten der Zulaufleitung 1 gegenüber der Ablaufleitung 2.

Falls, insbesondere in Anwendungsfällen, bei welchen eine größere Druckdifferenz zwischen Zulaufleitung 1 und Ablaufleitung 2 auftreten kann, eine noch bessere Abdichtung des Ventils 4 zwischen Zulaufseite und Ablaufseite gewünscht ist, kann zwischen Innenrohr 5 und Außenrohr 6, wieder in einer auf der Außenseite des Innenrohres 5 umlaufenden Nut und zwar innerhalb der Querbohrungen 7, 7', ein weiterer Dichtungsring 26 vorgesehen sein. Diese Dichtung 26 ist allerdings verzichtbar, wenn die Druckdifferenz zwischen Zulauf und Ablauf nur gering ist und wenn ohnehin eine Beimengung von unfiltriertem Wasser zu dem filtrierten Wasser vorgesehen ist, da bei dichtem Sitz des Innenrohres 5 im Außenrohr 6 die eventuell zwischen Innenrohr 5 und Außenrohr 6 zusätzlich hindurchtretende Menge an unfiltriertem Wasser im Vergleich zu einer eingestellten Dosierung im allgemeinen vernachlässigbar gering sein dürfte.

In dem dargestellten Ausführungsbeispiel ist der freie Innenquerschnitt des Rohres 5 und der gleiche Querschnitt des engeren Abschnittes 13 des Bypasses 3 im Durchmesser um etwa 25% und dementsprechend in der Querschnittsfläche um etwa 56% größer als der Querschnitt jeder der Querbohrungen 7, 8. Auch wenn die Querbohrungen 7, 8 paarweise mit den Querbohrungen 7', 8' vorhanden sind, stellen diese Querbohrungen dennoch den begrenzenden Faktor für die maximale Beimengung von ungefiltertem zu gefiltertem Wasser dar.

Es versteht sich, daß eine Reihe verschiedener Modifikationen an der dargestellten Ausführungsform vorgenommen werden können, die zu einer gleichermaßen funktionsfähigen Anschlußeinheit führen würden. Beispielsweise könnten Zulaufleitung 1 und Ablaufleitung 2 bei gleicher Anordnung des Ventils 4 auch vertauscht werden, wenn auch die innere Wasserführung im Filter entsprechend angepaßt wird. Anders gesprochen könnte das Ventil 4 um 180° verdreht montiert werden, so daß es von der Seite der Zulaufleitung betätigbar wäre. Die Der Betätigungsschlitz 9 könnte auch durch einen Griff oder Drehknopf ersetzt werden und auch die Ventilmechanik könnte z. B. durch eine Klappe oder andere bekannte Ventilmechanismen ersetzt werden.

Im vorliegenden Fall besteht nahezu die gesamte Anschlußeinheit aus Kunststoff, insbesondere die in Figur 1 und 2 dargestellten Teile und auch der Ventilkorpus einschließlich Flansch 17, Ansatz 18 und Außenrohr 6. Lediglich die Ventilwelle 19 und das damit einstückig ausgebildete Innenrohr 5 bestehen aus Metall, vorzugsweise aus einem Edelstahl, der auch durch vollständig entsalztes Wasser nicht angegriffen wird.

Bei der dargestellten Skaleneinteilung in fünf gleiche Winkelbereiche, und bei einer Ertsreckung der (kreisförmigen) Bohrungen um knapp 90° in Umfangsrichtung ergeben die Stufen 0 - 5 laut Skaleneinteilung relative Überdeckungen der Bohrungen 7, 8 bzw. 7', 8' Überdeckungsgrade von ca. 0%, 10 %, 28 %, 50 %, 75 % und 100%.

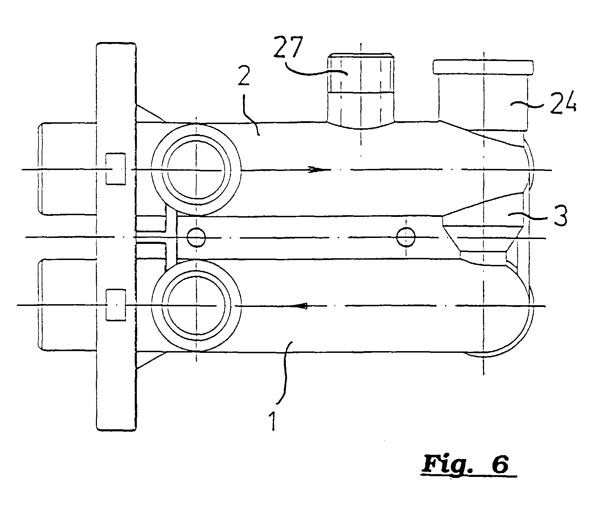

In Figur 6 ist eine weitere Ausführungsform der Erfindung in einer Draufsicht ähnlich wie im Falle der Figur 1 dargestellt. Wie man durch Vergleich mit Figur 1 leicht erkennt, weist diese Ausführungsform einen zusätzlichen Anzapfungsanschluß 27 auf, aus welchem gefiltertes Wasser abgezogen werden kann. Der Anschluß 27 kann mit einem (hier nicht dargestellten) Ventil versehen werden, welches normalerweise geschlossen ist. Diese Anzapfung soll vor allem dazu dienen, von Zeit zu Zeit die Wirksamkeit des Filtermaterials zu überprüfen. Zu diesem Zweck wird das Dosierventil im Bypass 3 geschlossen und das gefilterte Wasser über die Anzapfung 27 entnommen und einem geeigneten Geräte oder Indikator zugeführt, welches bzw. welcher den Filterzustand des Wassers und damit die Wirksamkeit des in dem Filter enthaltenen Filtermaterials anzeigt. Sollte sich hieraus ergeben, daß die Kapazität des Filtermaterials erschöpft ist, so muß das Filtermaterial bzw. die betreffende Filterpatrone ausgetauscht werden.

Die zusätzliche Anzapfung 27 kann im übrigen auch verwendet werden, um bei Inbetriebnahme eines neuen Filters oder nach längerem Nichtgebrauch eines Filters das gefilterte Wasser zuerst durch die Anzapfung 27 abfließen zu lassen, um den Filter zunächst kurz durchzuspülen, bevor das Wasser an dem normalen Entnahmeanschluß am Ende der Ablaufleitung und hinter dem Bypass 3 für den Gebrauch entnommen wird.

## Patentansprüche

1. Anschlußeinheit für Großgeräte-Wasserfilter mit einer in den Filter hineinführenden Zulaufleitung (1) und einer gefiltertes Wasser aus dem Filter herausführenden Ablaufleitung (2), **dadurch gekennzeichnet**, daß in einem die Zulaufleitung (1) und die Ablaufleitung (2) verbindenden Bypass (3) ein Dosierventil vorgesehen ist, welches eine gezielt einstellbare Verschneidung von gefiltertem und ungefiltertem Wasser in der Ablaufleitung erlaubt.

2. Anschlußeinheit nach Anspruch 1, **dadurch gekennzeichnet**, daß das Dosierventil (4) zwei konzentrische, relativ zueinander drehbar aber dicht ineinander geführte Rohre (5, 6) aufweist, welche auf gleicher axialer Höhe mindestens je eine Bohrung (7,8) aufweisen, die in einer ersten relativen Drehposition der Rohre (5, 6) miteinander fluchten und die in einer zweiten relativen Drehposition keine wechselseitige Überdeckung aufweisen, wobei die Rohre (5, 6) abgedichtet in den Bypass (3) eingesetzt sind und das Innere des Innenrohres (5) mit der einen Seite und das Äußere des Außenrohres (6) mit der anderen Seite des Bypasses (3) in Verbindung steht.

3. Anschlußeinheit nach Anspruch 2, **dadurch gekennzeichnet**, daß die Bohrungen (7, 8) als Durchgangsbohrungen ausgebildet sind, so daß jedes Rohr (5, 6) ein Paar von diametral gegenüberliegenden Bohrungen (7, 7', 8, 8') aufweist, die sich jeweils in Umfangsrichtung der Rohre (5, 6) über weniger als 90° erstredken.

4. Anschlußeinheit nach Anspruch 2 oder 3, **dadurch gekennzeichnet**, daß eines der Rohre (6) im Bypass (3) fixiert und das andere mit einer Ventilbetätigungseinrichtung (9) verbunden ist.

5. Anschlußeinheit nach Anspruch 4, **dadurch gekennzeichnet**, daß die Ventilbetätigungseinrichtung (9) mit einer Skala (10) versehen ist, welche proportional zum Winkelmaß der Überdeckungen der Bohrungen (7, 7', 8, 8') der Rohre (5, 6) ist.

6. Anschlußeinheit nach einem der Ansprüche 2 bis 5, **dadurch gekennzeichnet**, daß der freie Innenquerschnitt des Innenrohres (5) größer ist als der Querschnitt jeder der Ventilbohrungen (7, 8) in den Rohren (5, 6).

7. Anschlußeinheit nach einem der Ansprüche 2 bis 6, **dadurch gekennzeichnet**, daß der Bypass (3) einen mit dem Innenrohr (5) fluchtenden Abschnitt (13) mit im wesentlichen dem gleichen freien Querschnitt wie das Innenrohr (5) aufweist.

8. Anschlußeinheit nach einem der Ansprüche 2 bis 7, **dadurch gekennzeichnet**, daß die Ventilrohre (5, 6) sich in den Bereich der Zulaufleitung (1) oder Ablaufleitung (2) erstrecken und in diesem Bereich ihre Querbohrungen (7, 7', 8, 8') aufweisen.

9. Anschlußeinheit nach einem der Ansprüche 2 bis 8, **dadurch gekennzeichnet**, daß die Zulaufleitung (1) und die Ablaufleitung (2) einen wesentlich größeren Querschnitt als die Ventilbohrungen (7, 8) haben.

10. Anschlußeinheit nach einem der Ansprüche 1 bis 9, **dadurch gekennzeichnet**, daß der Bypass (3) als Stufenbohrung mit einem engeren (13) und einem weiteren Bohrungsabschnitt (12) ausgebildet ist, wobei der weitere Bohrungsabschnitt (12) als Sitz für einen Dichtungsring an dem Dosierventil (4), vorzugsweise an dessen Außenrohr (6) ausgebildet ist.

11. Anschlußeinheit nach einem der Ansprüche 2 bis 10, **dadurch gekennzeichnet**, daß der Ventilkörper (20) mit dem Außenrohr (6) einstückig ausgebildet ist und einen Dichtungsflansch (17) aufweist, der mit einem an der Anschlußeinheit vorgesehenen seitlichen Anschlußflansch (11) dicht verbunden ist.

12. Anschlußeinheit nach einem der Ansprüche 1 bis 10, **dadurch gekennzeichnet**, daß an der Ablaufleitung (2) eine Anzapfung (27) für das Abzweigen eines Teils des gefilterten Wassers vorgesehen ist.

13. Anschlußeinheit nach Anspruch 12, **dadurch gekennzeichnet**, daß die Anzapfung (27) durch ein Ventil verschließbar ist.

14. Anschlußeinheit nach einem der Ansprüche 12 oder 13, **dadurch gekennzeichnet**, daß die Anzapfung (27) in Strömungsrichtung des gefilterten Wassers vor dem Bypass (3) vorgesehen ist.
